# EUROPÄISCHE PATENTSCHRIFT

(11) **EP 3 140 191 B1**
(45) Veröffentlichungstag und Bekanntmachung des Hinweises auf die Patenterteilung: **13.06.2018**
(21) Anmeldenummer: 15726514.1
(22) Anmeldetag: 28.04.2015
(51) Int. Cl.: B64C 39/02, B64C 1/30

(54) **MULTIKOPTER MIT MULTIFUNKTIONALEN AUSLEGERN MIT ZUMINDEST EINEM ANTRIEB**
MULTICOPTER WITH MULTIFUNCTIONAL BOOM WITH AT LEAST ONE DRIVE
MULTICOPTÈRE AVEC BRAS MULTIFONCTIONNEL PRÉSENTANT AU MOINS UN DISPOSITIF D'ENTRAÎNEMENT

(30) Priorität: 06.05.2014 DE 202014003727 U
(43) Veröffentlichungstag der Anmeldung: 15.03.2017
(73) Patentinhaber: Fachhochschule Westküste Hochschule für Wirtschaft & Technik, 25746 Heide (DE)
(72) Erfinder: HOFSTÄTTER, Lukas, 24116 Kiel (DE)
(74) Vertreter: Hansen, Jochen
(86) Internationale Anmeldenummer: PCT/DE2015/100174
(87) Internationale Veröffentlichungsnummer: WO 2015/169279

(56) Entgegenhaltungen:
- CN-U- 201 800 918
- GB-A- 2 455 374
- US-A1- 2010 108 801
- US-A1- 2012 056 041

## Beschreibung

Die Erfindung betrifft eine Vorrichtung, die einen Multikopter mit einem multifunktionalen Ausleger mit zumindest einem Antrieb beansprucht, der insbesondere zur Verwendung in einem Multikoptersystem ausgelegt ist, der mit weiteren multifunktionalen Auslegern koppelbar ist und so ein einfaches Multikoptersystem bereitstellt.

Ein Multikoptersystem, im Sinne der Erfindung ist ein System von multifunktionalen Auslegern mit jeweils zumindest einem Antrieb, von dem zumindest ein Antrieb derart betreibbar ist, dass das System flugtaugliche Eigenschaften, wie Abheben, Landen und Manövrieren in der Luft, aufweist.

Die Erfindung ermöglicht es durch das Zusammenwirken von mindestens drei erfinderischen multifunktionalen Auslegern mit zumindest je einem Antrieb ohne weitere konstruktive Bauteile ein mechanisches Grundgerüst als Rahmen und Träger für Lasten bereitzustellen.

Die Erfindung stellt durch die Geometrie des multifunktionalen Auslegers, als länglicher, rohrförmiger, vorzugsweise teleskopartiger Körper mit z.B. kreisförmigem, ovalem, wabenförmigem, vieleckigem, T-Trägerförmigem und/oder Doppel T-Trägerförmigem Querschnitt, und die Geometrie des Zusammenwirkens mehrerer Ausleger in einem Multikoptersystem eine einfache, sichere und steife Konstruktion mit wenigen Teilen bereit.

Jeder multifunktionaler Ausleger bietet dabei durch seine Geometrie im Inneren einen sicheren Raum, im Sinne der Erfindung als Auslegerraum bezeichnet, für Bauteile und Lasten.

Konstruktiv sind damit ein schneller Zusammenbau und ein schnelles Zerlegen des Multikoptersystems möglich und weiter ist eine modulare, schnelle Austauschbarkeit sichergestellt. Damit kann ein Multikoptersystem flexibel an Parameter wie Reichweite, Traglast und/oder Beschränkungen im Transport, wie Gewicht, Stauraum-/Behälterwahl, Geometrie der Last angepasst werden.

Eine Minimalkonfiguration für ein Multikoptersystem kann einfach erweitert werden, wenn sich die Aufgabenstellung ändert und komplexe

Multikoptersysteme könne einfach in mehrere autonome Einheiten zerlegt werden. Die Ausleger können verteilt transportiert und gelagert werden um schnell, einfach und sicher zentral zu größeren Einheiten zusammengesetzt zu werden.

Ein weiterer Vorteil des erfinderischen multifunktionalen Auslegers ist die starke Vereinfachung der durch kontrollierte oder unkontrollierte Abstürze bedingten Reparaturerfordernisse durch eine schnelle Ergänzung funktionsunfähiger Teile oder Austausch funktionsunfähiger Teile mit insbesondere vorhandenen redundanten Teilen aus vorhandenen weiteren Auslegern eines Systems oder schaltungstechnischer Wahl verbliebener redundanter funktionsfähiger Teile.

Beim **Stand der Technik** werden die Ausleger, an denen die Motoren befestigt werden, sternförmig, über Kreuz, angeordnet und aufwendig mit so genannten Centerplates verschraubt. Die Centerplates verbinden die einzelnen Ausleger miteinander und bringen erst dadurch die nötige Steifigkeit in die Konstruktion.

Bei allen derzeit bekannten Multikoptern oder Multirotor-Flugsystemen, wie z.B. den durch die DE 10 2009 001 759 B4, DE 20 2012 002 513 U1, DE 20 2013 004 664 U1 und DE 20 2006 013 909 U1 gezeigten, wird das Frame von Auslegern und Centerplates gebildet. Das Frame, nach dem Stand der Technik, bildet dabei ein mechanisches Grundgerüst.

Aus der Druckschrift US 2010/0108801 A1 ist ein Drohnensystem bekannt, bei dem an einer zentralen Stelle einzelne Ausleger mit entsprechenden Antrieben und dergleichen vorgesehen sind, wobei diese unterschiedlich ausgestaltet sind.

Weiter ist aus der Druckschrift GB 2 455 374 A ist ebenfalls ein Drohnensystem bekannt, bei dem ein Rahmen ausgebildet ist, der ein Drei-Rotor-System triangulär aufspannt.

Aus der Druckschrift US 2012/0056041 A1 ist ein weiteres Drohnensystem bekannt, bei dem ein an einer zentralen Plattform einzelne Ausleger befestigt sind.

Bei diesen bekannten Frames werden die Ausleger, an denen die Motoren außen befestigt sind, sternförmig, über Kreuz angeordnet und über das Kreuz üblicherweise mit zwei so genannten Centerplates, zumeist von beiden Seiten, d.h. von oben und unten, verschraubt. Eines dieser Centerplates bildet den Träger auf oder an dem alle weiteren anderen Komponenten, wie Elektronik, Regelungseinheiten, Energieversorgung und Lasten, befestigt werden. Zumeist wird die auf dem Centerplate angebrachte Elektronik von einer zusätzlichen Haube oder Kuppel vor Beschädigungen geschützt.

Die mechanische Stabilität eines Frames spielt dabei für die Flugeigenschaften eines Multikopters aus dem Stand der Technik eine große Rolle. Bei einer unkontrollierten Landung, Kollision oder einem Absturz sind bei komplexen Multikoptersystemen mit Frames aufwändige Reparaturen und Wartungsarbeiten nötig, da die Bauteile, Ausleger und Centerplates, sich durch die Art ihrer Verbindung gegenseitig in Mitleidenschaft ziehen.

Die Alternative eines flexiblen und dabei weichen Frames ist ungeeignet, da dieser einen kontrollierbaren Flug eines Multikopter sehr stark erschwert, wenn nicht unmöglich macht, weil eine Regelung in Resonanz geraten und sich aufschaukeln kann. Sensoren können dabei die Lagedaten nicht genau messen, jedes Vibrieren, Schaukeln oder jede Eigenbewegung, z. B. durch Verwindungen des Frames, addieren sich als Messfehler und erhöhen die Schwierigkeiten bei der Kontrolle der Flugeigenschaften.

Die vorgenannten Mängel werden durch die Erfindung einfach und sicher beseitigt, da durch die multifunktionalen Ausleger ein neuer Weg für die Konstruktion von Multikoptersystemen bereitgestellt wird.

Der Erfindung liegt die Aufgabe zugrunde, einen einfachen, stabilen, leichten multifunktionalen Ausleger bereitzustellen, der mindestens einen Antrieb aufweist und mit weiteren solchen Auslegern die Basis für den Aufbau eines Multikopters bzw. eines Multikoptersystems zu bilden.

Eine weitere Aufgabe der Erfindung ist es den jeweiligen multifunktionalen Ausleger mit zumindest einem Antrieb modular zu verbinden. Der jeweilige Antrieb kann z.B. als Rotor-, Turbinen und/oder Düsensystem ausgelegt sein. Dabei ist eine Kombination verschiedener, auch mehrerer Antriebssysteme auch mit unterschiedlichen Leistungen an einem multifunktionalen Ausleger möglich.

Der Multikopterausleger ist aus einem länglichen Tragkörper mit einem distalen und einem proximalen Ende, wenigstens einem im Bereich des distalen Endes angeordneten Antrieb / Auftriebsmittel, einer im Bereich des proximalen Endes vorgesehenen ersten Verbindungseinrichtung und einer zwischen dem proximalen und dem distalen Ende vorgesehenen zweiten Verbindungseinrichtung gebildet, wobei zwei Multikopterausleger miteinander derart verbindbar sind, dass die erste Verbindungseinrichtung des ersten Multikopterauslegers mit der zweiten Verbindungseinrichtung des zweiten Multikopterauslegers miteinander verbunden werden.

Die zweiten Verbindungseinrichtungen der Multikopterausleger können bei Zusammenschaltung / Verbindung der Multikopterausleger äquidistant bei gleichen Antriebsmitteln und bei ungleichen Antriebsmitteln unterschiedlich entlang zwischen proximalen und distalen Ende auf den zusammenzuschaltenden Multikopterauslegern sein. Auf diese Weise können gleiche bzw. unterschiedliche Auftriebskräfte durch gleiche bzw. unterschiedliche Abstände der Verbindungseinrichtungen übertragen bzw. im Gesamtsystem gekoppelt werden, wobei insbesondere eine stabile Lage gesichert ist.

Die erste und zweite Verbindungseinrichtung können als lösbare kraftschlüssige Verbindungen ausgebildet sein, wobei diese bevorzugt als Steckverbindung, Schraubverbindung und/oder Klemmverbindung und/oder mittels Befestigungsmitteln, Schrauben, Splinte, Federsplinte, Steckverschlüsse, Zangen, Aufstecksysteme und/oder Schnappmechanismen besonders bevorzugt aus Kunststoff, Edelstahl, GFK und/oder Kohlenstofffaserverbundwerkstoffen ausgebildet sind.

Die Form des länglichen Tragkörpers kann geradlinig, linear und/oder gekrümmt in länglicher Richtung ausgebildet sein.

Eine Steuerungseinheit und/oder Regeleinheit für die Steuerung / Regelung des wenigstens einen Antriebs kann in oder an dem länglichen Tragkörper vorgesehen sein.

Die Steuerungseinheit und/oder Regeleinheit des einen Multikopterauslegers kann auch zur Steuerung weiterer Antriebe von weiteren Multikopterauslegern ausgebildet sein.

Die Steuerungseinheit und/oder Regeleinheit und/oder die Antriebe und/oder die Steuerungseinheiten mehrerer Multikopterausleger können durch vorgesehene Kommunikations-, Funk-, Bluetooth-, WLAN- und/oder Kabelverbindungen miteinander kommunizierend, steuernd und/oder regelnd ausgebildet sein, bevorzugt auch in einer Ausfallsicherung und/oder als Master-Slave-Konfiguration ausgebildet.

Es kann eine Energieversorgungseinheit und/oder eine Batterie zur Versorgung des Antriebs vorgesehen sein, wobei die Energieversorgungseinheit und/oder die Batterie an oder in dem länglichen Tragkörper angeordnet ist.

Es kann eine Navigationseinheit und/oder Kameraeinheit und/oder Umweltsensorikeinheit, insbesondere Ultraschall-, Radar-, Temperatur-, Luftdruck-, Wind- und/oder Regensensoren, vorgesehen sein, wobei die Einheiten an oder in dem länglichen Tragkörper angeordnet sind.

Der längliche Tragkörper kann eine verwindungssteife Geometrie, vorzugsweise als rohrförmig, kastenförmiger oder wabenförmiger Hohlkörper, aufweisen, bevorzugt in seiner Längserstreckung teleskopierbar ausgebildet sein.

Es können mehrere Antriebe an einem Multikopterausleger vorgesehen sein.

Der Multikopter weißt wenigstens drei miteinander verbundene Multikopterausleger auf, wobei die Verbindung eines Multikopterauslegers jeweils über die erste Verbindungseinrichtung mit einem ersten anderen Multikopterausleger und über die zweite Verbindungseinrichtung mit einem zweiten anderen Multikopterausleger erfolgt, so dass zwischen den Multikopterauslegern ein polygonförmiger Raum/Fläche aufgespannt wird.

Es kann eine zentrale Steuerung, elektronische Regelung, besonders bevorzugt mit GPS, ACC, Gyro, und/oder Datenspeicher, zumindest eine Datenschnittstelle, wie Antennen, WLAN, LAN, und/oder Bluetooth, zumindest eine Energieversorgung, wie Akku, Batterie und/oder wenigstens ein Photovoltaik-Element jeweils an oder in zumindest einem der multifunktionalen Ausleger und/oder in dem polygonförmig aufgespannten Raum zwischen den Multikopterauslegern angeordnet sein, wobei besonders bevorzugt alle Antriebe versorgbar und regelbar sind.

Der polygonförmig aufgespannte Raum zwischen den Multikopterauslegern kann als Lastaufnahmeraum, bevorzugt mit einer Schutzummantelung, ausgebildet sein, wobei in diesem Lastaufnahmeraum eine zu transportierende Ladung lösbar haltend aufnehmbar ist.

Der Multikopter kann fernsteuerbar und/oder Steuer-, Bild- und/oder Messeinheiten fernauslesbar/fernauswertbar ausgebildet sein.

Der einfachste, denkbare Fall, der z.B. im Notfall, bei Ausfall oder Abbau von Antrieben von einem der Ausleger eines Multikoptersystems Anwendung finden kann, ist der eines Zentralantriebes oder zweier Antriebe, wobei dann nicht mehr von einem aktivierten Multikoptersystem gesprochen wird.

Ein weiterer Vorteil ist die Möglichkeit der redundanten Auslegung durch Verwendung von Bauteilen in und/oder am jeweiligen Ausleger, wie elektronischen Regelung, gekoppelt mit GPS und Antennen zur Datenübertragung, mit Schnittstellen intern, dh. zur Regelung der Antriebe und von Funktionalitäten elektronischer Lasten, und extern zur Datenübertragung, wie Messdaten, Bildinformationen und Regelung von Funktionalitäten, z.B. der Flugleitung, Orientierung und Lastenaktivierung, Lastenauslösung, z.B. durch eine Basisstation, und miteinander koppelbarer Einheiten zur Energieversorgung.

Eine Schnittstelle im Sinne der Erfindung ist sowohl eine mechanische, elektrische und/oder elektronische Kontaktverbindung, als auch eine datentechnische Verbindung, z.B ein Datenprotokoll, WLAN, Bluetooth, Antennen und/oder analoge und digitale Funkverbindungen.

Durch die Anbringung besonders stossempfindlicher oder störeempfindlicher Elektronik und Bauteile im jeweiligen multifunktionalen Ausleger, der auch elektronisch schirmend ausgelegt werden kann, wird ein zusätzlicher Schutz erreicht, der ergänzende Hauben oder Schutzeinrichtungen überflüssig macht und damit eine weitere Gewichtseinsparung bringt.

Beim Zusammenbau, Zusammenklappen und/oder Wegklappen der jeweiligen Ausleger kann eine Schnittstellenverbindung, z.B. durch elektrische, mechanische oder optische Kontaktbewegungen, hergestellt werden, mit der Datenübertragungen, Bereitschafts-, Funktions- und/oder Sicherheitschecks initiiert und angezeigt bzw. datentechnisch übermittelt werden.

Bei dem Zusammenbau mehrerer multifunctionaler Ausleger, wird mit der Fixierung eines jeweiligen ersten distalen Endes eines Auslegers an jeweils nur einem anderen Ausleger, vorzugsweise in einer Ebene, ein geometrische Struktur gebildet, bei der die distalen Enden der Ausleger ein Vieleck umschließen und die jeweiligen zweiten Enden über dieses Vieleck in der Ebene hinausragen.

Der Raum, der durch das Vieleck und die bautechnische Geometrie jedes Auslegers umschlossen wird, ist im Sinne der Erfindung der Zentraler Nutzraum, der bevorzugt für die Unterbringung von Lasten nutzbar ist. Eine Verbindungsplatte in Form eines Gehäuses oder mindestens einer sogenannten Centerplate als Nutzraum oder Lastenplattform ist damit obsolet.

Die Geometrie der Vielecke und die Verbindung derartiger Geometrien miteinander ist nicht eingeschränkt. Durch die Wahl geeigneter Symmetrien, können Antriebe unterschiedlicher Auslegungen in der Leistung und/oder geometrischer, materialtechnischer und/oder gewichtsbezogener Auslegungen auf den jeweiligen Ausleger,die gesamte Multikoptergeometrie und die Einsatzvorgaben abgestimmt werden.

Für die Verbindung der multifunktionalen Ausleger miteinander und von Antrieben und Lasten am jeweiligen Ausleger ist es von Vorteil standardisierte Befestigungspunkte und Befestigungsmittel, wie Schrauben, Splinte, Federsplinte, Steckverschlüsse, Zangen, Aufstecksysteme und/oder Schnappmechanismen, besonders bevorzugt aus Kunststoff, Edelstahl und/oder Kohlenstofffaserverbundwerkstoffen, einheitlich vorzusehen, um auch hier die Austauschbarkeit der Befestigungsmittel untereinander zu gewährleisten.

Die Befestigungspunkte am Ausleger sind so gewählt, dass Ausleger ausgetauscht werden können, ohne dass ein gesamtes Multikoptersystem zerlegt werden muß, indem diese Befestigungspunkte bevorzugt an der Oberfläche des jeweiligen Auslegers und den distalen Enden der jeweiligen Ausleger angebracht sind.

Bei einer Wahl von leicht zerstörbaren Befestigungsmitteln, wie z.B. Kunststoffschrauben, sind gezielt Sollbruchstellen planbar. Bei Abstürzen können damit die Kunststoffschrauben vom Ausleger gezielt abgeschert werden, ehe dieser verbiegt oder bricht.

Im Gegenzug wird bei einer Wahl von schwer zerstörbaren Befestigungsmitteln, wie z.B. Edelstahlschrauben oder massiven Stiften, der Verbund der Ausleger miteinander verstärkt, um z.B. den Zentralen Nutzraum noch besser für dort angebrachte empfindliche und teure Lasten, wie Elektronik abzusichern.

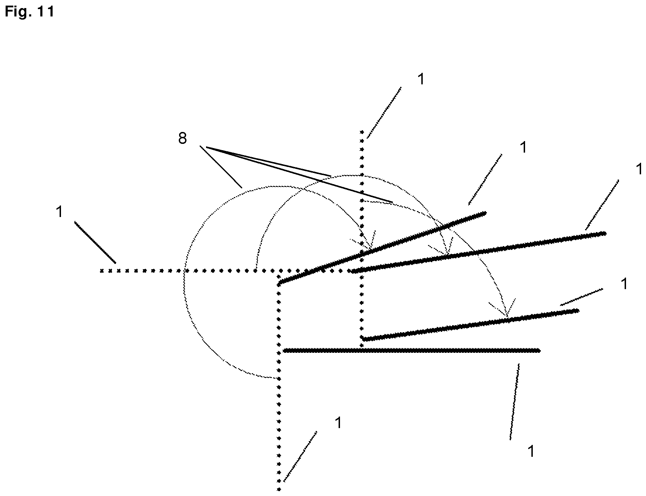

Für den Transport eines derartigen Multikopters können auch nur einige wenige Befestigungsmittel leicht entfernbar gewählt werden, um einzelne oder eine Gruppe von Auslegern in der Ebene zur Seite zu klappen (vgl. Fig. 11, 12). Die gesamte Struktur des derart zusammengeklappten Multikopters, mit Auslegern, die eine Parallele Ausrichtung zueinander erfahren, verliert dadurch nicht an Steifigkeit, da die Ausleger lediglich zur Seite geklappt werden. Es ist von Vorteil, dass die Antriebe und sonstigen Bauteile separat transportiert und vorgehalten werden können.

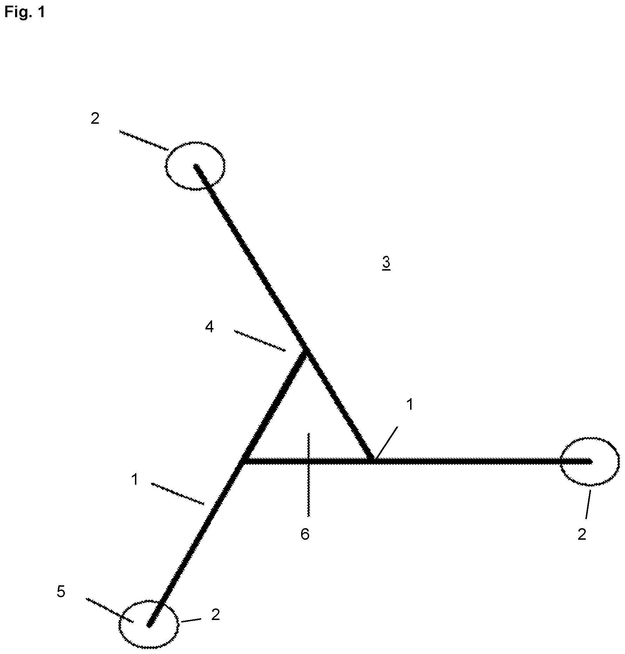

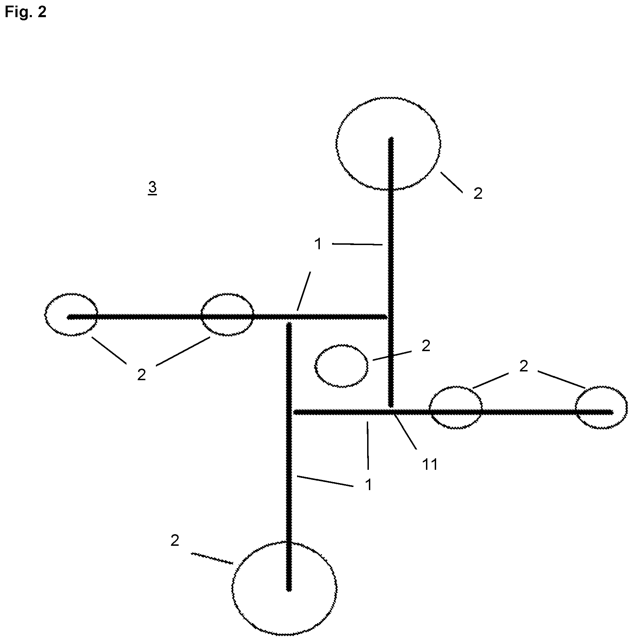

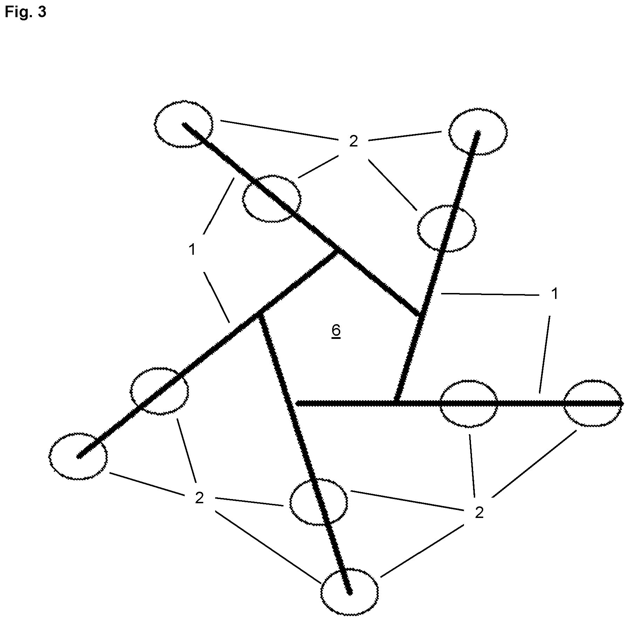

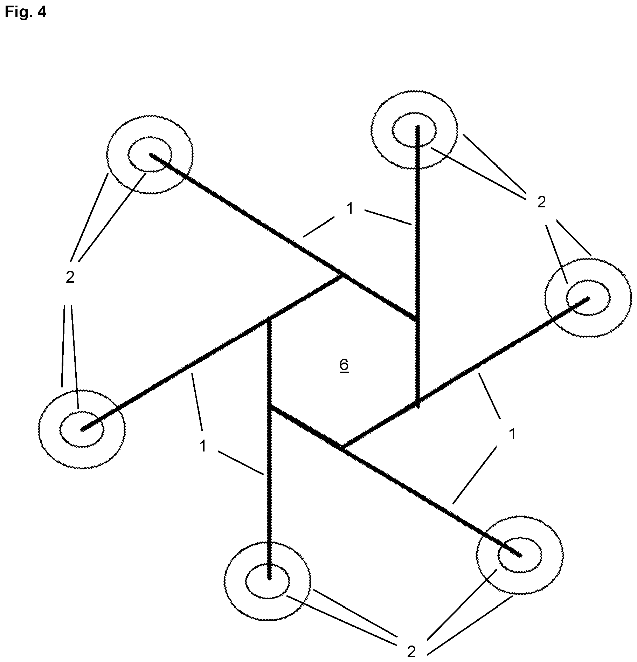

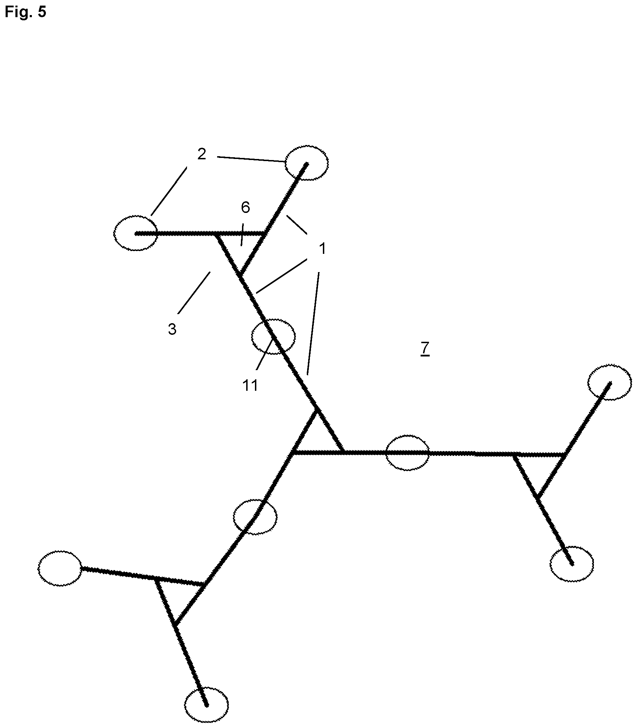

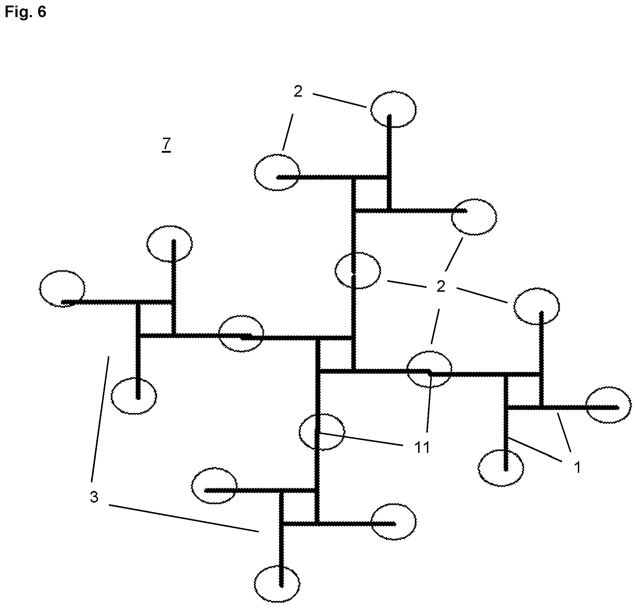

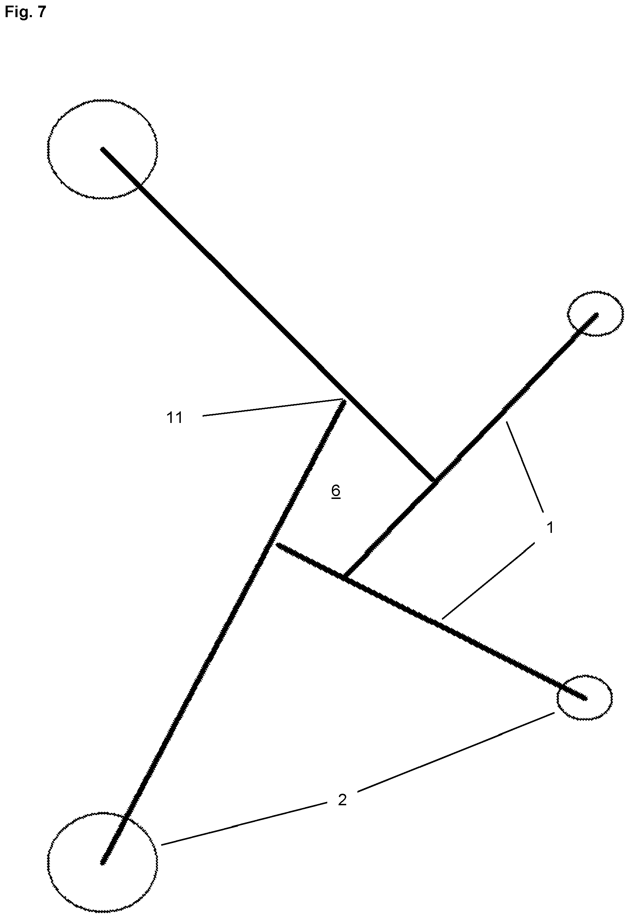

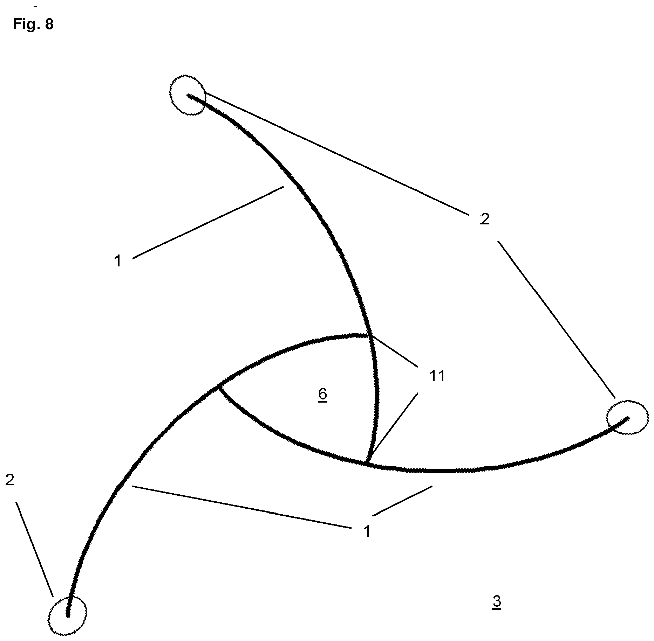

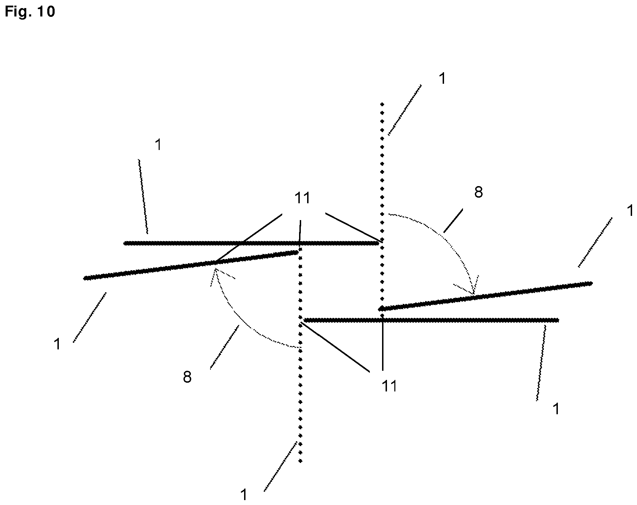

Die Materialien für einen aus derartigen multifunktionalen Auslegern gebildeten Multikopter, sind vorzugsweise auf leichte und in ihrer Struktur feste Bauststoffe gerichtet, wie sie auch im Flugzeugbau Verwendung finden, z.B. Verbundwerkstoffe, Leichtmetalle, Kunststoffe und Holz sowie Kombinationen davon. Die Verwendung derartiger mulitfunktionaler Ausleger als Multikopter, insbesonders in der Funktion als Lastenträger, kann vom Boden, Wasser und aus der Luft erfolgen und durch den Einsatz einer Fernbedienung über weite Entfernungen kontrolliert werden. In den nachfolgenden Figuren 1 bis 11 werden Ausgestaltungen der Erfindung beispielhaft erläutert.
- **Fig. 1**: zeigt drei multifunktionale Ausleger (1) jeweils mit einem Antrieb (2) eines Trägersystems (3).
- **Fig. 2**: zeigt vier multifunktionale Ausleger (1) mit unterschiedlichen Antrieben (2) und einem Antrieb (2) im zentralen Raum (12) eines Trägersystems (3).
- **Fig. 3**: zeigt fünf multifunktionale Ausleger (1) mit je zwei Antrieben (2) eines Trägersystems (3).
- **Fig. 4**: zeigt sechs multifunktionale Ausleger (1) mit je zwei unterschiedlichen Antrieben (2) eines Trägersystems (3).
- **Fig. 5**: zeigt die Kombination von vier Trägersystemen (3) in einem Gesamtträgersystem (7) mit je drei Auslegern (1)und Antrieben (2).
- **Fig. 6**: zeigt die Kombination von fünf Trägersystemen (3) in einem Gesamtträgersystem (7) mit je vier Auslegern (1) und Antrieben (2).
- **Fig. 7**: zeigt vier multifunktionale Ausleger (1) mit unterschiedlichen Antrieben (2) in einem asymmetrischen Trägersystem (3).
- **Fig. 8**: zeigt drei multifunktionale bogenförmige Ausleger (1) jeweils mit einem Antrieb (2) eines Trägersystems (3).

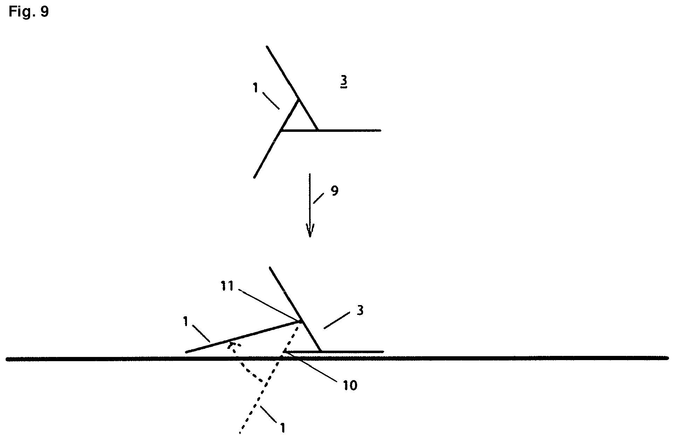

- **Fig. 9**: zeigt den Vorgang eines kontrollierten oder unkontrollierten Absturzes (9) mit gezielt angebrachter Sollbruchstelle (10) eines Trägersystems (3) mit drei multifunktionalen Auslegern (1). Im oberen Teil der Figur ist ein Trägersystem (3) mit drei multifunktionalen Auslegern (1) gezeigt, wobei die Antriebe (2) nicht dargestellt sind. Im unteren Teil des Bildes ist die Situation des Trägersystems (3) nach dem Aufprall auf einem Untergrund gezeigt. Ein multifunktionaler Ausleger (1) ist um einen Befestigungspunkt (11) geschwenkt dargestellt. Die vorherige Position und Bewegungsrichtung ist als gestrichelte Linie ausgeführt. Eine Sollbruchstelle (10) an einer der Befestigungspunkte (11) an einem weiteren multifunktionalen Ausleger (1) hat diese Bewegung beim Aufschlag ermöglicht.
- **Fig. 10**: zeigt den Vorgang eines ersten Einklappvorganges (8) eines Trägersystems (3) mit vier multifunktionalen Auslegern (1) als Vorbereitung für einen Transport. Die vorherige Position und Bewegungsrichtung ist als gestrichelte Linie ausgeführt.
- **Fig. 11**: zeigt den Vorgang eines zweiten Einklappvorganges (8) eines Trägersystems (3) mit vier multifunktionalen Auslegern (1) als Vorbereitung für einen Transport. Die vorherige Position und Bewegungsrichtung ist als gestrichelte Linie ausgeführt.

### Bezugszeichenliste

- 1: Multifunktionaler Ausleger
- 2: Antrieb
- 3: Trägersystem
- 4: Erstes distales Ende
- 5: Zweites distales Ende
- 6: Zentraler Nutzraum
- 7: Gesamtträgersystem
- 8: Einklappvorgang
- 9: Absturz
- 10: Sollbruchstelle
- 11: Befestigungspunkt

## Patentansprüche

1. Multikopter aufweisend wenigstens drei miteinander verbundene Multikopterausleger (1), wobei die Multikopterausleger (1) jeweils aus einem länglichen Tragkörper mit einem distalen (5) und einem proximalen Ende (4), wenigstens einem im Bereich des distalen Endes (5) angeordneten Antrieb / Auftriebsmittel (2), einer im Bereich des proximalen Endes (4) vorgesehenen ersten Verbindungseinrichtung (11) und einer zwischen dem proximalen (4) und dem distalen Ende (5) vorgesehenen zweiten Verbindungseinrichtung (11) ausgebildet sind, wobei zwei der Multikopterausleger (1) miteinander derart verbindbar sind, dass die erste Verbindungseinrichtung (11) des ersten Multikopterauslegers (1) mit der zweiten Verbindungseinrichtung (11) des zweiten Multikopterauslegers (1) miteinander verbunden werden, **dadurch gekennzeichnet, dass** die Verbindung jedes der Multikopterausleger (1) jeweils über die erste Verbindungseinrichtung mit einem ersten anderen Multikopterausleger (1) der wenigstens drei Multikopterausleger und über die zweite Verbindungseinrichtung mit einem zweiten anderen Multikopterausleger (1) der wenigstens drei Multikopterausleger erfolgt, so dass zwischen den Multikopterauslegern (1) ein polygonförmiger Raum/Fläche aufgespannt wird.

2. Multikopter nach Anspruch 1,
**dadurch gekennzeichnet, dass**
die zweiten Verbindungseinrichtungen der Multikopterausleger (1) bei Zusammenschaltung / Verbindung der Multikopterausleger (1) äquidistant sind und die Antriebe (2) der Multikopterausleger (1) jeweils gleichartig sind; oder dass
die Antriebe (2) der Multikopterausleger (1) ungleichartig sind und die zweiten Verbindungseinrichtungen unterschiedlich entlang zwischen proximalen (4) und distalen Ende (5) auf den zusammenzuschaltenden Multikopterauslegern (1) sind.

3. Multikopter nach Anspruch 1 oder 2,
**dadurch gekennzeichnet, dass**
die erste und zweite Verbindungseinrichtung (11) als lösbare kraftschlüssige Verbindungen ausgebildet sind, wobei diese bevorzugt als Steckverbindung, Schraubverbindung und/oder Klemmverbindung und/oder mittels Befestigungsmitteln, Schrauben, Splinte, Federsplinte, Steckverschlüsse, Zangen, Aufstecksysteme und/oder Schnappmechanismen besonders bevorzugt aus Kunststoff, Edelstahl, GFK und/oder Kohlenstofffaserverbundwerkstoffen ausgebildet sind.

4. Multikopter nach Anspruch 1, 2 oder 3,
**dadurch gekennzeichnet, dass**
die Form des länglichen Tragkörpers geradlinig, linear und/oder gekrümmt in länglicher Richtung ausgebildet ist.

5. Multikopter nach Anspruch 1, 2, 3 oder 4,
**dadurch gekennzeichnet, dass**
eine Steuerungseinheit und/oder Regeleinheit für die Steuerung / Regelung des wenigstens einen Antriebs (2) in oder an dem länglichen Tragkörper vorgesehen ist.

6. Multikopter nach Anspruch 5,
**dadurch gekennzeichnet, dass**
die Steuerungseinheit und/oder Regeleinheit eines der Multikopterausleger (1) auch zur Steuerung weiterer Antriebe (2) von weiteren Multikopterauslegern ausgebildet ist.

7. Multikopter nach Anspruch 5 oder 6,
**dadurch gekennzeichnet, dass**
die Steuerungseinheit und/oder Regeleinheit und/oder die Antriebe (2) und/oder die Steuerungseinheiten mehrerer der Multikopterausleger (1) durch vorgesehene Kommunikations-, Funk-, Bluetooth-, WLAN- und/oder Kabelverbindungen miteinander kommunizierend, steuernd und/oder regelnd ausgebildet sind, bevorzugt auch in einer Ausfallsicherung und/oder als Master-Slave-Konfiguration ausgebildet.

8. Multikopter nach einem der vorangehenden Ansprüche,
**dadurch gekennzeichnet, dass**
eine Energieversorgungseinheit und/oder eine Batterie zur Versorgung des Antriebs vorgesehen ist, wobei die Energieversorgungseinheit und/oder die Batterie an oder in dem länglichen Tragkörper angeordnet ist.

9. Multikopter nach einem der vorangehenden Ansprüche,
**dadurch gekennzeichnet, dass**
eine Navigationseinheit und/oder Kameraeinheit und/oder Umweltsensorikeinheit, insbesondere Ultraschall-, Radar-, Temperatur-, Luftdruck-, Wind- und/oder Regensensoren, vorgesehen ist, wobei die Einheiten an oder in dem länglichen Tragkörper angeordnet sind.

10. Multikopter nach einem der vorangehenden Ansprüche,
**dadurch gekennzeichnet, dass**
der längliche Tragkörper eine verwindungssteife Geometrie, vorzugsweise als rohrförmig, kastenförmiger oder wabenförmiger Hohlkörper, aufweist, bevorzugt in seiner Längserstreckung teleskopierbar ausgebildet ist.

11. Multikopter nach einem der vorangehenden Ansprüche,
**dadurch gekennzeichnet, dass**
mehrere Antriebe (2) an einem der Multikopterausleger (1) vorgesehen sind.

12. Multikopter nach einem der vorangehenden Ansprüche,
**dadurch gekennzeichnet, dass**
eine zentrale Steuerung, elektronische Regelung, besonders bevorzugt mit GPS, ACC, Gyro, und/oder Datenspeicher, zumindest eine Datenschnittstelle, wie Antennen, WLAN, LAN, und/oder Bluetooth, zumindest eine Energieversorgung, wie Akku, Batterie und/oder wenigstens ein Photovoltaik-Element jeweils an oder in zumindest einem der Multikopterausleger (1) und/oder in dem polygonförmig aufgespannten Raum zwischen den Multikopterauslegern (1) angeordnet ist, wobei besonders bevorzugt alle Antriebe (2) versorgbar und regelbar sind.

13. Multikopter nach einem der vorangehenden Ansprüche,
**dadurch gekennzeichnet, dass**
der polygonförmig aufgespannte Raum zwischen den Multikopterauslegern (1) als Lastaufnahmeraum, bevorzugt mit einer Schutzummantelung, ausgebildet ist, wobei in diesem Lastaufnahmeraum eine zu transportierende Ladung lösbar haltend aufnehmbar ist.

14. Multikopter nach einem der vorangehenden Ansprüche,
**dadurch gekennzeichnet, dass**
der Multikopter fernsteuerbar und/oder Steuer-, Bild- und/oder Messeinheiten fernauslesbar/fernauswertbar ausgebildet sind.

## Claims

1. A multicopter having at least three multicopter arms (1) connected together, wherein the multicopter arms (1) are formed in each case from an elongate supporting body with a distal (5) and a proximal end (4), at least one drive/lift means (2) arranged in the region of the distal end (5), a first connecting means (11) provided in the region of the proximal end (4) and a second connecting means (11) provided between the proximal (4) and the distal end (5),
wherein two of the multicopter arms (1) can be connected together such that the first connecting means (11) of the first multicopter arm (1) are connected together with the second connecting means (11) of the second multicopter arm (1), **characterised in that** the connection of each of the multicopter arms (1) in each case takes place by means of the first connecting means with a first other multicopter arm (1) of the at least three multicopter arms, and by means of the second connecting means with a second other multicopter arm (1) of the at least three multicopter arms, so that a polygonal space/surface is spanned between the multicopter arms (1).

2. A multicopter according to Claim 1,
**characterised in that**
the second connecting means of the multicopter arms (1) are equidistant when the multicopter arms (1) are interconnected/connected, and the drives (2) of the multicopter arms (1) are of the same type in each case; or **in that** the drives (2) of the multicopter arms (1) are not of the same type and the second connecting means are different along between the proximal (4) and distal end (5) on the multicopter arms (1) which are to be interconnected.

3. A multicopter according to Claim 1 or 2,
**characterised in that**
the first and second connecting means (11) are designed as detachable non-positive connections, these preferably being formed as a plug-in connection, screw connection and/or clamping connection and/or by means of fastening means, screws, split-pins, spring split-pins, plug-type closures, pincers, attachment systems and/or snap mechanisms particularly preferably made of plastics material, high-grade steel, GRP and/or carbon-fibre composite materials.

4. A multicopter according to Claim 1, 2 or 3,
**characterised in that**
the form of the elongate supporting body is designed to be rectilinear, linear and/or curved in the elongate direction.

5. A multicopter according to Claim 1, 2, 3 or 4,
**characterised in that**
a control unit and/or regulating unit for controlling/regulating the at least one drive (2) is provided in or on the elongate supporting body.

6. A multicopter according to Claim 5,
**characterised in that**
the control unit and/or regulating unit of one of the multicopter arms (1) is also designed to control further drives (2) of further multicopter arms.

7. A multicopter according to Claim 5 or 6,
**characterised in that**
the control unit and/or regulating unit and/or the drives (2) and/or the control units of a plurality of the multicopter arms (1) are designed to communicate with each other, to control and/or regulate by communications, radio, Bluetooth, WLAN and/or cable connections which are provided, preferably also in a failover and/or as a master/slave configuration.

8. A multicopter according to one of the preceding claims,
**characterised in that** a power supply unit and/or a battery is/are provided for supplying the drive, the power supply unit and/or the battery being arranged on or in the elongate supporting body.

9. A multicopter according to one of the preceding claims,
**characterised in that**
a navigation unit and/or camera unit and/or environmental sensor unit, in particular ultrasound, radar, temperature, air pressure, wind and/or rain sensors, is/are provided, wherein the units are arranged on or in the elongate supporting body.

10. A multicopter according to one of the preceding claims,
**characterised in that**
the elongate supporting body has a torsionally rigid geometry, preferably in the form of a tubular, box-shaped or honeycomb hollow body, preferably is designed to be telescopable in its longitudinal extent.

11. A multicopter according to one of the preceding claims,
**characterised in that**
a plurality of drives (2) are provided on one of the multicopter arms (1).

12. A multicopter according to one of the preceding claims,
**characterised in that**
a central control means, electronic regulation means, particularly preferably with GPS, ACC, gyro and/or data memory, at least one data interface, such as antennas, WLAN, LAN and/or Bluetooth, at least one energy supply means, such as rechargeable battery, battery and/or at least one photovoltaic element in each case is arranged on or in at least one of the multicopter arms (1) and/or in the polygonally spanned space between the multicopter arms (1), wherein particularly preferably all the drives (2) can be supplied and regulated.

13. A multicopter according to one of the preceding claims,
**characterised in that**
the polygonally spanned space between the multicopter arms (1) is designed as a load-carrying space, preferably with a protective covering, with a load which is to be transported being able to be received in detachably holding manner in this load-carrying space.

14. A multicopter according to one of the preceding claims,
**characterised in that**
the multicopter is designed to be able to be remote-controlled and/or control, image and/or measurement units are designed to be remotely readable/remotely evaluable.

## Revendications

1. Multirotor présentant au moins trois bras de multirotor (1) reliés ensemble, les bras de multirotor (1) étant formés chacun d'un corps de support allongé pourvu d'une extrémité distale (5) et d'une extrémité proximale (4), d'au moins un entraînement / moyen d'entraînement (2) disposé dans la zone de l'extrémité distale (5), d'un premier système de liaison (11) prévu dans la zone de l'extrémité proximale (4) et d'un deuxième système de liaison (11) prévu entre l'extrémité proximale (4) et l'extrémité distale (5), les bras de multirotor (1) pouvant être reliés ensemble de telle sorte que le premier système de liaison (11) du premier bras de multirotor (1) est relié au deuxième système de liaison (11) du deuxième bras de multirotor (1), **caractérisé en ce que** la liaison de chacun des bras de multirotor (1) est réalisée par le premier système de liaison avec un premier bras de multirotor (1) différent des au moins trois bras de multirotor et par le deuxième système de liaison avec un deuxième bras de multirotor (1) différent des au moins trois bras de multirotor, de sorte qu'un espace/une surface de forme polygonale est réalisée entre les bras de multirotor (1).

2. Multirotor selon la revendication 1, **caractérisé en ce que** les deuxièmes systèmes de liaison des bras de multirotor (1) sont équidistants lorsque les bras de multirotor (1) sont interconnectés/reliés et les entraînements (2) des bas de multirotor (1) sont chacun du même type ; ou **en ce que** les entraînements (2) des bras de multirotor (1) sont de types différents et les deuxièmes systèmes de liaison sont positionnés à des distances différentes entre les extrémités proximales (4) et distales (5) le long des bras de multirotor (1) à interconnecter.

3. Multirotor selon la revendication 1 ou 2, **caractérisé en ce que** le premier et le deuxième système de liaison (11) sont conçus comme des liaisons par friction pouvant être défaites, celles-ci étant de préférence conçues sous la forme d'une connexion enfichable, d'une connexion par vis et/ou d'une connexion par serrage et/ou à l'aide de moyens de fixation, de vis, de goupilles, de goupilles fendues à ressort, de raccordements enfichables, de pinces, de systèmes par insertion et/ou de mécanismes à encliquetage, de façon privilégiée en matière plastique, en acier spécial, en plastique à renfort de fibres de verre et/ou en matériau composite à fibres de carbone.

4. Multirotor selon la revendication 1, 2 ou 3, **caractérisé en ce que** la forme du corps de support allongé est conçue rectiligne, linéaire et/ou cintrée dans la direction longitudinale.

5. Multirotor selon la revendication 1, 2, 3 ou 4, **caractérisé en ce qu'**une unité de commande et/ou une unité de régulation est prévue pour la commande / régulation dudit au moins un entraînement (2) dans ou sur le corps de support allongé.

6. Multirotor selon la revendication 5, **caractérisé en ce que** l'unité de commande et/ou l'unité de régulation de l'un des bras de multirotor (1) sont conçues également pour commander d'autres entraînements (2) d'autres bras de multirotor.

7. Multirotor selon la revendication 5 ou 6, **caractérisé en ce que** l'unité de commande et/ou l'unité de régulation et/ou les entraînements (2) et/ou les unités de commande de plusieurs des bras de multirotor (1) sont conçues pour communiquer, commander et/ou réguler ensemble par le biais de connexions prévues de communication, par radio, par Bluetooth, par réseau sans fil et/ou par câble, de préférence sont conçus également dans une commutation automatique et/ou comme configuration maître-esclave.

8. Multirotor selon l'une des revendications précédentes, **caractérisé en ce qu'**une unité d'alimentation en énergie et/ou une pile sont prévues pour l'alimentation de l'entraînement, l'unité d'alimentation en énergie et/ou la pile étant disposées sur ou dans le corps de support allongé.

9. Multirotor selon l'une des revendications précédentes, **caractérisé en ce qu'**une unité de navigation et/ou une unité de caméra et/ou une unité de capteur environnemental sont prévues, en particulier des capteurs ultrason, radar, de température, de pression atmosphérique, de vent et/ou de pluie, les unités étant disposées sur ou dans le corps de support allongé.

10. Multirotor selon l'une des revendications précédentes, **caractérisé en ce que** le corps de support allongé présente une géométrie rigide à la torsion, de préférence sous la forme d'un corps creux tubulaire, en forme de caisson ou en forme de nid d'abeilles, de préférence conçu de façon télescopique dans son extension longitudinale.

11. Multirotor selon l'une des revendications précédentes, **caractérisé en ce que** plusieurs entraînements (2) sont prévus sur un des bras de multirotor (1).

12. Multirotor selon l'une des revendications précédentes, **caractérisé en ce qu'**une commande centrale, une régulation électronique, de préférence avec GPS, ACC, gyroscope, et/ou une mémoire de données, au moins une interface de données, telle qu'une antenne, un réseau sans fil, un réseau local, et/ou du Bluetooth, au moins une alimentation en énergie, telle qu'une batterie, une pile et/ou au moins un élément photovoltaïque sont placés chacun sur ou dans au moins un des bras de multirotor (1) et/ou dans l'espace de forme polygonale réalisé entre les bras de multirotor (1), tous les entraînements (2) pouvant être de préférence alimentés et régulés.

13. Multirotor selon l'une des revendications précédentes, **caractérisé en ce que** l'espace de forme polygonale réalisé entre les bras de multirotor (1) est conçu comme un espace pour recevoir une charge, de préférence avec une enveloppe de protection, une charge à transporter pouvant être reçue et retenue de façon détachable dans cet espace pour recevoir une charge.

14. Multirotor selon l'une des revendications précédentes, **caractérisé en ce que** le multirotor est conçu pour être commandé à distance et/ou les unités de commande, d'image et/ou de mesure sont conçues pour être consultées/exploitées à distance.
